# EUROPÄISCHE PATENTSCHRIFT

(11) **EP 2 002 665 B1**
(45) Veröffentlichungstag und Bekanntmachung des Hinweises auf die Patenterteilung: **24.10.2012**
(21) Anmeldenummer: 07722897.1
(22) Anmeldetag: 22.02.2007
(51) Int. Cl.: H04Q 1/14

(54) **VERTEILEREINRICHTUNG EINER TELEKOMMUNIKATIONSANLAGE MIT KOMPENSATIONSEINRICHTUNG**
DISTRIBUTOR DEVICE OF A TELECOMMUNICATION SYSTEM COMPRISING A COMPENSATING DEVICE
DISPOSITIF RÉPARTITEUR D'UNE INSTALLATION DE TÉLÉCOMMUNICATION, POURVU D'UN DISPOSITIF DE COMPENSATION

(30) Priorität: 05.04.2006 DE 202006005683 U
(43) Veröffentlichungstag der Anmeldung: 17.12.2008
(73) Patentinhaber: CCS Technology, Inc., Wilmington, DE 19803 (US)
(72) Erfinder: LIPKOWSKI, Marc, 58640 Iserlohn (DE); LAPP, Oliver, 42399 Wuppertal (DE); BADURA, Stefan, 58708 Menden (DE); HOFFMANN, Wolfgang, 58097 Hagen (DE)
(74) Vertreter: Sturm, Christoph
(86) Internationale Anmeldenummer: PCT/EP2007/001521
(87) Internationale Veröffentlichungsnummer: WO 2007/115604

(56) Entgegenhaltungen:
- EP-A- 1 455 418
- WO-A-01/97532
- WO-A-2005/053324
- US-A1- 2005 207 561

## Beschreibung

Die Erfindung betrifft eine Verteilerleiste einer Telekommunikationsanlage gemäß dem Oberbegriff des Anspruchs 1.

Die DE 100 29 870 A1 offenbart eine als Verteilerblock ausgebildete Verteilereinrichtung einer Telekommunikationsanlage mit einer Aufnahmewanne, in der sandwichartig übereinander mehrere Verteilereleisten sowie Drahtführungselemente positioniert sind. Jede Verteilerleiste verfügt über ein Funktionselement, das an einer Vorderseite vorzugsweise als IDC Kontakte ausgebildete Kontaktelemente für den Anschluss ankommender und abgehender Kabeladern aufweist. Weiterhin umfasst das Funktionselement einer Verteilerleiste mit den Kontaktelementen derselben elektrisch leitend verbundene Kontaktfedem zum Herstellen von Verbindungen zwischen ankommenden Kabeladern und abgehenden Kabeladern. Die Drahtführungselemente weisen Drahtführungsebenen bildende Drahtführungskanäle zur Führung der Kabelader auf. Die Verteilerleisten sowie die Drahtführungselemente sind derart sandwichartig übereinander positioniert, dass zwischen zwei benachbarten Verteilerleisten mindestens eine Drahtführungsebene mit Drahtführungskanälen positioniert ist.

Weiterhin ist es aus der DE 100 29 870 A1 bekannt, in die Verteilereinrichtung sogenannte xDSL-Splittereinrichtungen zu integrieren, die zum Beispiel an einer Rückseite in die Verteilerleisten einsteckbar sind, um über die ankommenden bzw. abgehenden Kabeladern zu leitende niederfrequente Sprachsignale und hochfrequente Datensignale zu einem kombinierten Sprach-Daten-Signal zusammenzuführen bzw. voneinander zu trennen.

Zur Realisierung hoher Packungsdichten werden die Verteilerleisten sowie die Drahtführungselemente mit möglichst geringen Abmessungen sowie möglichst kompakt ausgeführt. Kabeladern liegen demnach dicht beieinander. Insbesondere bei der Übertragung von Daten mit hohen Übertragungsfrequenzen kann es zwischen Kabeladern unterschiedlicher Teilnehmer, die an einem solchen Verteilerblock rangiert bzw. verdrahtet werden, zu einem unerwünschten sogenannten Nebensprechen oder Übersprechen kommen.

Insbesondere dann, wenn xDSL-Dienste wie zum Beispiel VDSL-Dienste mit Übertragungsfrequenzen von mehr als 10 MHz auf den Kabeladern übertragen werden, kann es auch zwischen Kabeladern desselben Teilnehmers zu einem unerwünschten sogenannten Nebensprechen oder Übersprechen kommen. So kann insbesondere das hochfrequente Datensignal von der Kabelader, auf welcher das kombinierte Sprach-Daten-Signal übertragen wird, unter Umgehung einer xDSL-Splittereinrichtung auf die Kabelader überspringen, auf welcher ausschließlich das niederfrequente Sprachsignal zu übertragen ist.

Durch das sogenannte Nebensprechen oder das Übersprechen wird die Übertragungsqualität beeinträchtigt.

Um dem Problem des Nebensprechens bzw. Übersprechens Rechnung zu tragen, werden bei aus dem Stand der Technik bekannten Verteilereinrichtungen von Telekommunikationsanlagen, so bei der aus der DE 20 2005 003 878.4 bekannten Verteilereinrichtung, die Kabeladern unterschiedlicher Teilnehmer gegeneinander geschirmt. Eine Schirmung erfolgt dadurch, dass metallische oder metallisierte Schirmungselemente zwischen benachbarten Drahtführungsebenen angeordnet werden. Ebenso können Drahtführungskanäle begrenzende Wände metallisch bzw. metallisiert ausgeführt werden. Mit solchen Schirmungselementen kann die Ausbildung von unerwünschtem Nebensprechen bzw. Übersprechen in gewissem Umfang unterbunden werden, dann jedoch, wenn bereits ein Nebensprechen oder Übersprechen erfolgt ist, sind derartige Schirmungseinrichtungen wirkungslos.

Die US 2005/0207561 A1 betrifft die Kompensation bei R.J. Datenbuchsen.

Hiervon ausgehend liegt der vorliegenden Erfindung das Problem zu Grunde, eine neuartige Verteilereinrichtung einer Telekommunikationsanlage zu schaffen.

Nach einem ersten Aspekt der hier vorliegenden Erfindung wird dieses Problem durch eine Verteilerleiste mit den Merkmalen des Anspruchs 1 gelöst.

Mit der hier vorliegenden Erfindung wird erstmals vorgeschlagen, in eine Verteilerleiste einer Telekommunikationseinrichtung Kompensationseinrichtung zu integrieren, die der Kompensation von Übersprechen bzw. von Nebensprechen dienen. Hierdurch wird es erstmals möglich, auch bei Verteilerblöcken mit einer hohen Packungsdichte Signale mit hohen Übertragungsfrequenzen störungsfrei zu übertragen.

Die Kompensationseinrichtungen sind in den elektrischen Signalweg zwischen Kontaktelementen für den Anschluss ankommender Kabeladern und Kontaktelementen für den Anschluss abgehender Kabeladern integriert, nämlich entweder lösbar oder unlösbar.

Im Sinne der hier vorliegenden Erfindung sind in der Verteilerleiste bzw. im Verteilerblock durch Übersprechen bzw. Nebensprechen verursachte Übertragungsstörungen aus den zu übertragenden Signalen entfernbar. Dies ist ein deutlicher Unterschied zum Stand der Technik, in welchem lediglich durch Schirmungseinrichtungen versucht wird, durch Übersprechen bzw. Nebensprechen verursachte Übertragungsstörungen zu unterbinden.

Bevorzugte Weiterbildungen der Erfindung ergeben sich aus den Unteransprüchen und der nachfolgenden Beschreibung. Ausführungsbeispiele werden anhand der Zeichnung näher erläutert. In der Zeichnung zeigt:
- Fig. 1: eine erfindungsgemäße Verteilereinrichtung, nämlich eine Verteilerleiste, nach einem ersten Ausführungsbeispiel der Erfindung in perspektivischer Ansicht;
- Fig. 2: eine erfindungsgemäße Verteilereinrichtung, nämlich eine Verteilerleiste, nach einem zweiten Ausführungsbeispiel der Erfindung in perspektivischer Ansicht;
- Fig. 3:: eine erfindungsgemäße Verteilereinrichtung, nämlich einen Verteilerblock, mit mehreren erfindungsgemäßen Verteilerleisten nach einem dritten Ausführungsbeispiel der Erfindung in perspektivischer Ansicht;
- Fig. 4:: ein Kassettenelement des erfindungsgemäßen Verteilerblocks bzw. der erfindungsgemäßen Verteilerleiste gemäß Fig. 1 in perspektivischer, gegenüber Fig. 1 um in etwa 90° gedrehter Ansicht; und
- Fig. 5:: eine Aufnahmewanne einer erfindungsgemäßen Verteilereinrichtung, nämlich eines Verteilerblock, nach einem vierten Ausführungsbeispiel der Erfindung in perspektivischer Ansicht.

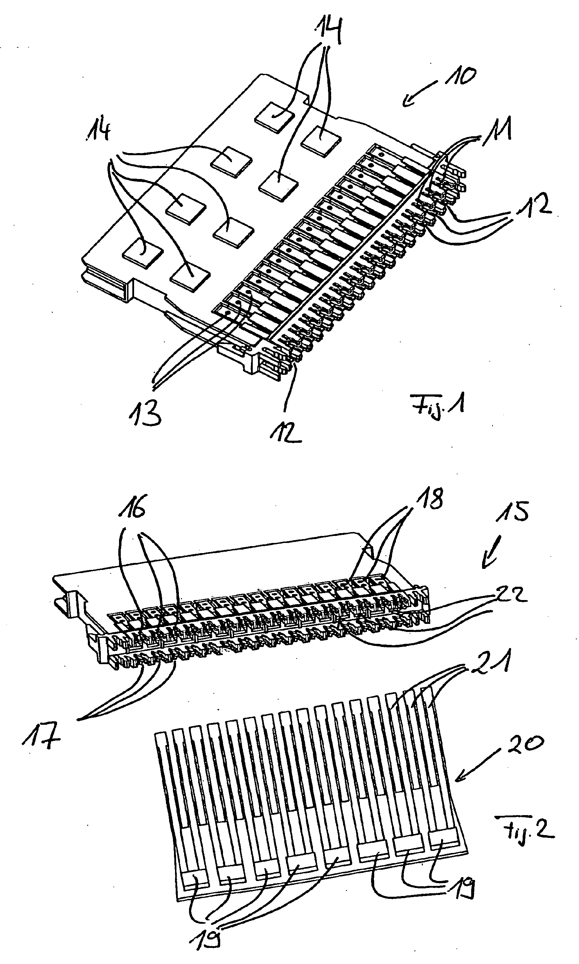

Fig. 1 zeigt ein erstes Ausführungsbeispiel einer erfindungsgemäßen, als Verteilerleiste ausgebildeten, Verteilereinrichtung einer Telekommunikationsanlage. Die in Fig. 1 dargestellte Verteilerleiste 10 verfügt über ein Funktionselement, wobei das Funktionselement an einer Vorderseite der Verteilerleiste 10 mehrere als IDC Kontakte ausgebildete Kontaktelemente aufweist.

Erste Kontaktelemente 11, die in einer Reihe nebeneinander angeordnet sind, dienen dem Anschluss ankommender Kabeladern an die Verteilerleiste 10. Zweite Kontaktelemente 12, die ebenfalls in einer Reihe nebeneinander und damit oberhalb bzw. unterhalb der Reihe aus den ersten Kontaktelementen 11 angeordnet sind, dienen dem Anschluss abgehender Kabeladern an die Verteilerleiste 10.

Sowohl mit den ersten Kontaktelementen 11 als auch mit den zweiten Kontaktelementen 12 sind Kontaktfedem elektrisch leitend verbunden, wobei in Fig. 1 lediglich die mit den ersten Kontaktelementen 11 elektrisch leitend verbundenen Kontaktfedem 13 sichtbar sind. Die mit den zweiten Kontaktelementen 12 elektrisch leitend verbundenen Kontaktfedem liegen unterhalb der in Fig. 1 sichtbaren Kontaktfedem 13 und bilden zusammen mit denselben elektrisch leitende Verbindungen zwischen ankommender Kabeladern und abgehenden Kabeladern aus.

In die in Fig. 1 dargestellte Verteilerleiste sind Kompensationseinrichtungen 14 integriert, und zwar derart, dass die Kompensationseinrichtungen in den elektrischen Verbindungsweg zwischen den Kontaktelementen 11 für den Anschluss ankommender Kabeladern und die Kontaktelemente 12 für den Anschluss abgehender Kabeladern integriert sind. Die Kompensationseinrichtungen verfügen über aktive und/oder passive Bauelemente, um durch Nebensprechen bzw. durch Übersprechen verursachte Übertragungsstörungen zu kompensieren.

Im gezeigten Ausführungsbeispiel der Fig. 1 dient die Verteilerleiste 10 dem Anschluss von Kabeladern für insgesamt acht Teilnehmer, wobei für jeden Teilnehmer mindestens eine Kompensationseinrichtung 14 in die Verteilerleiste 11 integriert ist. Jede der Kompensationseinrichtungen 14 ist dabei in den elektrischen Verbindungsweg zwischen den einem Teilnehmer zugeordneten Kontaktelementen 11 und 12 für den Anschluss ankommender Kabeladern und abgehender Kabeladern integriert bzw. geschaltet.

Im Ausführungsbeispiel der Fig. 1 sind dabei die Kompensationseinrichtungen 14 derart in das Funktionselement der Verteilerleiste 10 integriert, dass jede Kompensationseinrichtung 14 unlösbar in den entsprechenden elektrischen Verbindungsweg zwischen den Kontaktelementen 11 und 12 geschaltet ist.

Ein weiteres Ausführungsbeispiel einer erfindungsgemäßen Verteilerleiste 15 zeigt Fig. 2, wobei auch die Verteilerleiste 15 der Fig. 2 ein Funktionselement mit als IDC Kontakten ausgebildeten Kontaktelementen 16 für den Anschluss ankommender Kabeladern und Kontaktelementen 17 für den Anschluss abgehender Kabeladern aufweist.

Die Kontaktelemente 16 für den Anschluss ankommender Kabeladern sowie die Kontaktelemente 17 für den Anschluss abgehender Kabeladern sind wiederum in jeweils einer Reihe nebeneinander angeordnet, wobei die Reihe mit den Kontaktelementen 16 für den Anschluss ankommender Kabeladern in Fig. 2 oberhalb der Reihe mit den Kontaktelementen 17 für den Anschluss abgehender Kabeladern angeordnet ist. Mit den Kontaktelementen 16 und 17 sind wiederum Kontaktfedem elektrisch leitend verbunden, wobei die Kontaktfedem dem Herstellen von Verbindungen zwischen ankommenden Kabeladern und abgehenden Kabeladern dienen. In Fig. 2 sind wiederum nur solche Kontaktfedem 18 sichtbar, die mit den Kontaktelementen 16 elektrisch leitend verbunden sind.

Auch die Verteilerleiste 15 des Ausführungsbeispiels der Fig. 2 umfasst Kompensationseinrichtungen 19, die der Kompensation von durch Nebensprechen bzw. Übersprechen verursachten Übertragungsstörungen dienen. Im Ausführungsbeispiel der Fig. 2 sind mehrere Kompensationseinrichtungen 19, nämlich eine der Teilnehmeranzahl der Verteilerleiste 15 entsprechende Anzahl von Kompensationseinrichtungen 19, zu einer Leiteplatte bzw. Platine 20 zusammengefasst, wobei die Platine 20 über Kontaktzungen 21 an einer Vorderseite der Verteilerleiste 15 zwischen Kontaktfedern derselben eingeführt werden kann.

Wie Fig. 2 entnommen werden kann, sind zwischen den an der Vorderseite verlaufenden Reihen aus ersten Kontaktelementen 16 und zweiten Kontaktelementen 17 Öffnungen 22 ausgebildet, in welche die Kontaktzungen 21 einführbar sind, um dieselben elektrisch leitend mit den Kontaktfedern zu kontaktieren und so die Kompensationseinrichtungen 19 lösbar in die elektrischen Verbindungswege zwischen den Kontaktelementen 16 und 17 zu integrieren.

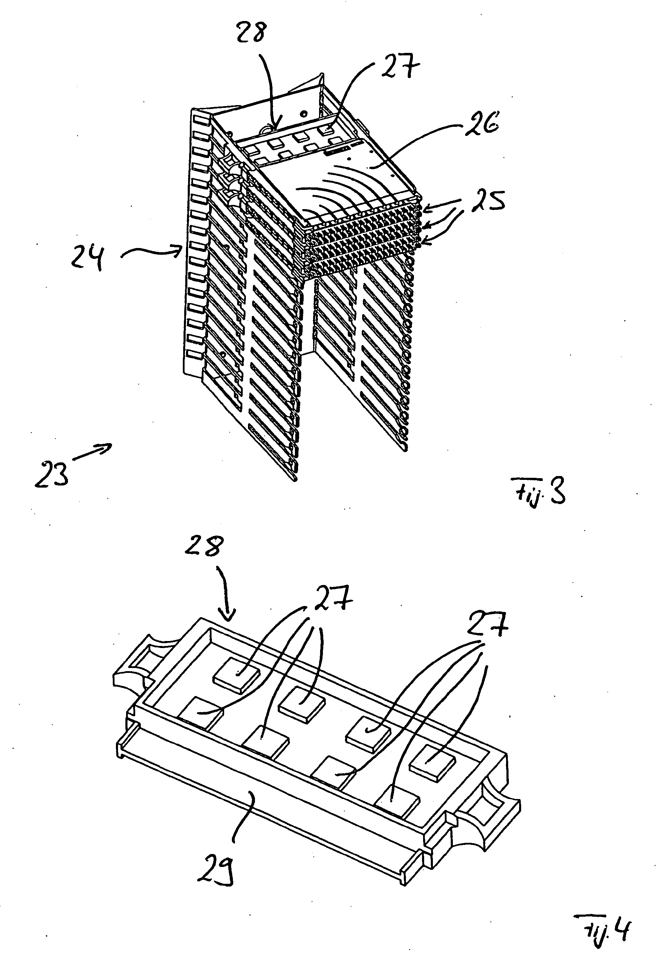

Ein weiteres Ausführungsbeispiel der Erfindung wird nachfolgend unter Bezugnahme auf Fig. 3 und 4 beschrieben, wobei Fig. 3 eine als Verteilerblock 23 ausgebildete Verteilereinrichtung zeigt. Der Verteilerblock 23 verfügt über eine Aufnahmewanne 24, in der sandwichartig übereinander einerseits Verteilerleisten 25 und andererseits Drahtführungselemente 26 angeordnet sind. Fig. 3 zeigt eine Aufnahmewanne 24 mit insgesamt drei in derselben platzierten Verteilerleisten 25, wobei oberhalb und unterhalb der Verteilerleisten 25 die Drahtführungselemente 26 angeordnet sind. Die Verteilerleisten 25 verfügen wiederum jeweils über ein Funktionselement mit Kontaktelementen für den Anschluss ankommender Kabeladern und mit Kontaktelementen für den Anschluss abgehender Kabeladern, wobei Kontaktfedern zum Herstellen von Verbindungen zwischen ankommenden Kabeladern und abgehenden Kabeladern elektrisch leitend mit diesen Kontaktelementen verbunden sind.

In die Verteilerleisten 25 des Verteilerblocks 23 und damit in den Verteilerblock 23 sind Kompensationseinrichtungen 27 integriert, wobei die Kompensationseinrichtungen 27 in den elektrischen Verbindungsweg zwischen den Kontaktelementen für den Anschluss ankommender Kabeladern und den Kontaktelementen für den Anschluss abgehender Kabeladern geschaltet sind. In Fig. 4 sind die einer Verteilerleiste 25 zugeordneten Kompensationseinrichtungen 27 wiederum zu einem Kassettenelement 28 zusammengefasst, wobei das Kassettenelement 28 über eine Kontaktleiste 29 an einer Rückseite eines Funktionselements und damit an einer Rückseite einer Verteilerleiste 25 zwischen die Kontaktfedern des Funktionselements eingeführt werden kann.

Gegenüber der in Fig. 2 dargestellten Variante, in welcher das Kassettenelement an der Vorderseite in eine Verteilerleiste eingeführt wird, verfügt das Einführen des Kassettenelements an einer Rückseite der Verteilerleiste gemäß Fig. 3 und 4 über den Vorteil, dass die an den Vorderseiten der Verteilerleiste positionierten, als IDC Kontakte ausgebildeten Kontaktelemente zum Anschluss angehender Kabeladern sowie abgehender Kabeladern ungehindert zugänglich sind.

Die Ausführungsbeispiele der Fig. 2 sowie Fig. 3 bis 4 verfügen gegenüber dem Ausführungsbeispiel der Fig. 1 über den Vorteil, dass bereits im Feld installierte Verteilereinrichtungen durch die Kassettenelemente problemlos nachgerüstet werden können.

Im Unterschied zu dem in Fig. 2 gezeigten Ausführungsbeispiel ist es auch möglich, die Kompensationseinrichtungen als Einzelstecker auszuführen, die dann über individuelle Kontaktzungen an der Vorderseite der Verteilerleiste zwischen Kontaktfedern eines Teilnehmers eingeführt werden können.

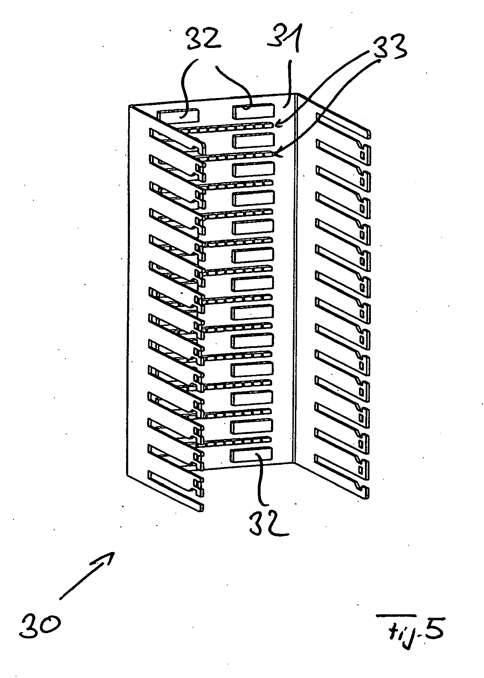

Fig. 5 zeigt eine Aufnahmewanne 30 eines erfindungsgemäßen Verteilerblocks nach einem weiteren Ausführungsbeispiel der hier vorliegenden Erfindung, wobei im Ausführungsbeispiel der Fig. 5 an einer Rückseite 31 der Aufnahmewanne 30 Kompensationseinrichtungen 32 angeordnet und in die Aufnahmewanne 30 integriert sind.

In die Aufnahmewanne 30 einzuführende, nicht-dargestellte Verteilerleisten können mit ihren Kontaktfedem über Schnittstellen 33, die ebenfalls an der Rückwand 31 der Aufnahmewanne 30 ausgebildet sind, mit den Kompensationseinrichtungen 32 elektrisch leitend verbunden werden, um dieselben letztendlich in den Verbindungsweg zwischen Kontaktelementen für den Anschluss ankommender Kabeladern und Kontaktelementen für den Anschluss abgehender Kabeladern zu integrieren.

Die in die Verteilereinrichtungen integrierten Kompensationseinrichtungen können als mehrstufige Kompensationseinrichtungen ausgeführt sein, um Nebensprechen bzw. Übersprechen im Sinne einer Grobkompensation und einer nachgeschalteten Feinkompensation zu kompensieren.

Die Stufen einer mehrstufigen Kompensationseinrichtung sind ortsversetzt und in Reihe in einen elektrischen Verbindungsweg zwischen einem Kontaktelement für den Anschluss einer ankommenden Kabelader und einem Kontaktelement für den Anschluss einer abgehenden Kabelader integriert, um so Zeitverschiebungen und/oder Phasenverschiebungen der Stufen zur Verstärkung des Kompensationseffekts zu nutzen.

Die Kompensationseinrichtungen sind vorzugsweise derart ausgestaltet, dass dieselben dem Kompensieren von Übersprechen bzw. von Nebensprechen zwischen Kabeladern unterschiedlicher Teilnehmer dienen.

Nach einer Weiterbildung der hier vorliegenden Erfindung können zusätzlich zu den Kompensationseinrichtungen auch xDSL-Splittereinrichtungen zusammen mit den Kompensationseinrichtungen in die Verteilereinrichtungen integriert sein. Vorzugsweise sind dann die Kompensationseinrichtungen sowie die xDSL-Splittereinrichtungen gemeinsam in einen elektrischen Verbindungsweg zwischen einem Kontaktelement für den Anschluss ankommender Kabeladern und einem Kontaktelement für den Anschluss abgehender geschaltet. Bei den xDSL-Splittereinrichtungen handelt es sich insbesondere um VDSL-Splittereinrichtungen.

In diesem Fall sind die Kompensationseinrichtungen vorzugsweise derart ausgestaltet, dAss dieselben dem Kompensieren von Übersprechen bzw. von Nebensprechen zwischen Kabeladern desselben Teilnehmers dienen.

In den gezeigten Ausführungsbeispielen sind die Kompensationseinrichtungen entweder lösbar oder unlösbar in die jeweiligen elektrischen Verbindungswege zwischen Kontaktelementen für den Anschluss ankommender Kabeladern und Kontaktelementen für den Anschluss abgehender Kabeladern integriert. Es ist kein Verdrahtungsaufwand bzw. Verkabelungsaufwand zwischen den Kompensationseinrichtungen und den Kontaktfedern der Verteilerleisten erforderlich. Auch dann, wenn die Kompensationseinrichtungen lösbar in das Funktionselement einer Verteilerleiste integriert sind, ist kein Verdrahtungsaufwand erforderlich. Vielmehr können als Kassettenelemente oder Einzelstecker ausgebildete Kompensationseinrichtungen über Kontaktzungen bzw. Kontaktleisten einfach mit den Kontaktfedem elektrisch kontaktiert werden, nämlich durch Einschieben derselben zwischen die Kontaktfedern.

### Bezugszeichenliste

- 10: Verteilerleiste
- 11: Kontaktelement
- 12: Kontaktelement
- 13: Kontaktfeder
- 14: Kompensationseinrichtung
- 15: Verteilerleiste
- 16: Kontaktelement
- 17: Kontaktelement
- 18: Kontaktfeder
- 19: Kompensationseinrichtung
- 20: Platine
- 21: Kontaktzunge
- 22: Öffnung
- 23: Verteilerblock
- 24: Aufnahmewanne
- 25: Verteilerleiste
- 26: Drahtführungselement
- 27: Kompensationseinrichtung
- 28: Kassettenelement
- 29: Kontaktleiste
- 30: Aufnahmewanne
- 31: Rückwand
- 32: Kompensationseinrichtung

## Patentansprüche

1. Verteilerleiste einer Telekommunikationsanlage, mit einem Funktionselement, wobei das Funktionselement Kontaktelemente für den Anschluss ankommender Kabeladern und Kontaktelemente für den Anschluss abgehender Kabeladern aufweist, und wobei das Funktionselement weiterhin mit den Kontaktelementen elektrisch leitend verbundene Kontaktfedern zum Herstellen von Verbindungen zwischen ankommenden Kabeladern und abgehenden Kabeladern aufweist, **gekennzeichnet durch** mindestens eine mehrstufige Kompensationseinrichtung (14; 19; 27), die in einen elektrischen Verbindungsweg zwischen einem Kontaktelement für den Anschluss einer ankommenden Kabelader und einem Kontaktelement für den Anschluss einer abgehenden Kabelader integriert ist, wobei die oder jede Kompensationseinrichtung (14; 19; 27) der Kompensation von Nebensprechen bzw. Übersprechen zwischen Kabeladern unterschiedlichen Teilnehmer über eine Grobkompensation und eine Feinkompensation dient, wobei Stufen einer mehrstufigen Kompensationseinrichtung derart ortsversetzt und in Reihe in einen elektrischen Verbindungsweg zwischen einem Kontaktelement für den Anschluss einer ankommenden Kabelader und einem Kontaktelement für den Anschluss einer abgehenden Kabelader integriert sind, dass Zeitverschiebungen und/oder Phasenverschiebungen der Stufen zur Verstärkung des Kompensationseffekts nutzbar sind.

2. Verteilerleiste nach Anspruch 1, **dadurch gekennzeichnet, dass** die oder jede Kompensationseinrichtung (14) derart in das Funktionselement integriert ist, dass die oder jede Kompensationseinrichtung (14) unlösbar in den jeweiligen elektrischen Verbindungsweg zwischen einem Kontaktelement für den Anschluss einer ankommenden Kabelader und einem Kontaktelement für den Anschluss einer abgehenden Kabelader geschaltet ist.

3. Verteilerleiste nach Anspruch 1, **dadurch gekennzeichnet, dass** die oder jede Kompensationseinrichtung (19; 27) derart in das Funktionselement integriert ist, dass die oder jede Kompensationseinrichtung (19; 27) lösbar in den jeweiligen elektrischen Verbindungsweg zwischen einem Kontaktelement für den Anschluss einer ankommenden Kabelader und einem Kontaktelement für den Anschluss einer abgehenden Kabelader geschaltet ist.

4. Verteilerleiste nach Anspruch 3, **dadurch gekennzeichnet, dass** Kompensationseinrichtungen (27) für unterschiedliche Teilnehmer zu einem Kassettenelement (28) zusammengefasst sind, welches eine Kontaktleiste (29) aufweist, über die dasselbe an einer Rückseite des Funktionselements zwischen Kontaktfedern des Funktionselements einführbar ist.

5. Verteilerleiste nach Anspruch 3, **dadurch gekennzeichnet, dass** Kompensationseinrichtungen (19) für unterschiedliche Teilnehmer zu einer Platine (20) zusammengefasst sind, welche Kontaktzungen (21) aufweist, über die dieselbe an einer Vorderseite des Funktionselements zwischen Kontaktfedern des Funktionselements einführbar ist.

6. Verteilerleiste nach Anspruch 3, **dadurch gekennzeichnet, dass** jede Kompensationseinrichtung für einen Teilnehmer als Einzelstecker ausgeführt und über individuelle Kontaktzungen an einer Vorderseite des Funktionselements zwischen Kontaktfedem des Funktionselements einführbar ist.

7. Verteilerleiste nach einem oder mehreren der Ansprüche 1 bis 6, **dadurch gekennzeichnet, dass** in den elektrischen Verbindungsweg zwischen Kontaktelementen für den Anschluss ankommender Kabeladern und Kontaktelementen für den Anschluss abgehender Kabeladern neben Kompensationseinrichtungen zusätzlich xDSL-Splittereinrichtungen integriert sind.

8. Verteilerleiste nach Anspruch 7, **dadurch gekennzeichnet, dass** die oder jede Kompensationseinrichtung derart ausgestaltet ist, dass dieselben dem Kompensieren von Übersprechen bzw. von Nebensprechen zwischen Kabeladern dient.

## Claims

1. Distribution strip of a telecommunications system, with a functional element, the functional element having contact elements for the connection of incoming cable cores and contact elements for the connection of outgoing cable cores, and the functional element furthermore having contact springs, which are electrically conductively connected to the contact elements, for producing connections between incoming cable cores and outgoing cable cores, **characterized by** at least one multi-stage compensation device (14; 19; 27), which is integrated in an electrical connecting path between a contact element for the connection of an incoming cable core and a contact element for the connection of an outgoing cable core, the or each compensation device (14; 19; 27) being used for compensation of crosstalk or side-to-side crosstalk between cable cores of different subscribers via coarse compensation and fine compensation, whereby stages of a multi-stage compensation device being integrated, spatially offset and in series, into an electrical connecting path between a contact element for the connection of an incoming cable core and a contact element for the connection of an outgoing cable core in such a way that temporal shifts and/or phase shifts of the stages can be used for enhancing the compensation effect.

2. Distribution strip according to Claim 1, **characterized in that** the or each compensation device (14) is integrated in the functional element in such a way that the or each compensation device (14) non-detachably into the respective electrical connecting path between a contact element for the connection of an incoming cable core and a contact element for the connection of an outgoing cable core.

3. Distribution strip according to Claim 1, **characterized in that** the or each compensation device (19; 27) is integrated in the functional element in such a way that the or each compensation device (19; 27) is connected detachably into the respective electrical connecting path between a contact element for the connection of an incoming cable core and a contact element for the connection of an outgoing cable core.

4. Distribution strip according to Claim 3, **characterized in that** compensation devices (27) for different subscribers are combined to form a cassette element (28), which has a contact strip (29), via which said cassette element can be introduced at a rear side of the functional element between contact springs of the functional element.

5. Distribution strip according to Claim 3, **characterized in that** compensation devices (19) for different subscribers are combined to form a printed circuit board (20), which has contact tongues (21), via which said printed circuit board can be introduced at a front side of the functional elements between contact springs of the functional element.

6. Distribution strip according to Claim 3, **characterized in that** each compensation device for a subscriber is in the form of an individual plug and can be introduced, via individual contact tongues, at a front side of the functional element between contact springs of the functional element.

7. Distribution strip according to one or more of Claims 1 to 6, **characterized in that**, in addition to compensation devices, xDSL splitter devices are also integrated in the electrical connecting path between contact elements for the connection of incoming cable cores and contact elements for the connection of outgoing cable cores.

8. Distribution strip according to Claim 7, **characterized in that** the or each compensation device is configured in such a way that it is used for compensating for side-to-side crosstalk or crosstalk between cable cores.

## Revendications

1. Barrette de distribution d'un équipement de télécommunication comprenant un élément fonctionnel, l'élément fonctionnel présentant des éléments de contact pour le raccordement de conducteurs de câble arrivants et des éléments de contact pour le raccordement de conducteurs de câble partants, et l'élément fonctionnel présentant en outre des ressorts de contact reliés de manière électriquement conductrice avec les éléments de contact pour établir des liaisons entre les conducteurs de câble arrivants et les conducteurs de câble partants, **caractérisée par** au moins un dispositif de compensation (14 ; 19 ; 27) à plusieurs étages qui est intégré dans un trajet de liaison électrique entre un élément de contact pour le raccordement d'un conducteur de câble arrivant et un élément de contact pour le raccordement d'un conducteur de câble partant, le ou chaque dispositif de compensation (14 ; 19 ; 27) servant à la compensation de la diaphonie ou de la transmodulation entre les conducteurs de câble de différents abonnés par le biais d'une compensation brute et d'une compensation fine, les étages d'un dispositif de compensation à plusieurs étages étant décalés et intégrés en série dans un trajet de liaison électrique entre un élément de contact pour le raccordement d'un conducteur de câble arrivant et un élément de contact pour le raccordement d'un conducteur de câble partant, de telle sorte que les décalages dans le temps et/ou les déphasages des étages peuvent être utilisés pour amplifier l'effet de compensation.

2. Barrette de distribution selon la revendication 1, **caractérisée en ce que** le ou chaque dispositif de compensation (14) est intégré dans l'élément fonctionnel de telle sorte que le ou chaque dispositif de compensation (14) est connecté de manière inamovible dans le trajet de liaison électrique correspondant entre un élément de contact pour le raccordement d'un conducteur de câble arrivant et un élément de contact pour le raccordement d'un conducteur de câble partant.

3. Barrette de distribution selon la revendication 1, **caractérisée en ce que** le ou chaque dispositif de compensation (19 ; 27) est intégré dans l'élément fonctionnel de telle sorte que le ou chaque dispositif de compensation (19 ; 27) est connecté de manière amovible dans le trajet de liaison électrique correspondant entre un élément de contact pour le raccordement d'un conducteur de câble arrivant et un élément de contact pour le raccordement d'un conducteur de câble partant.

4. Barrette de distribution selon la revendication 3, **caractérisée en ce que** les dispositifs de compensation (27) pour différents abonnés sont regroupés en un élément en cassette (28) qui présente une barrette de contact (29) par le biais de laquelle celui-ci peut être introduit au niveau d'un côté arrière de l'élément fonctionnel entre les ressorts de contact de l'élément fonctionnel.

5. Barrette de distribution selon la revendication 3, **caractérisée en ce que** les dispositifs de compensation (19) pour différents abonnés sont regroupés en une platine (20) qui présente des languettes de contact (21) par le biais desquelles celle-ci peut être introduite au niveau d'un côté avant de l'élément fonctionnel entre les ressorts de contact de l'élément fonctionnel.

6. Barrette de distribution selon la revendication 3, **caractérisée en ce que** chaque dispositif de compensation pour un abonné est réalisé sous la forme d'une fiche individuelle et peut être introduit par le biais de languettes de contact individuelles au niveau d'un côté avant de l'élément fonctionnel entre les ressorts de contact de l'élément fonctionnel.

7. Barrette de distribution selon une ou plusieurs des revendications 1 à 6, **caractérisée en ce que** des dispositifs séparateurs xDSL supplémentaires sont intégrés en plus des dispositifs de compensation dans le trajet de liaison électrique entre les éléments de contact pour le raccordement d'un conducteur de câble arrivant et les éléments de contact pour le raccordement d'un conducteur de câble partant.

8. Barrette de distribution selon la revendication 7, **caractérisée en ce que** le ou chaque dispositif de compensation est configuré de telle sorte que celui-ci sert à la compensation de la diaphonie ou de la transmodulation entre les conducteurs de câble.
